# EUROPÄISCHE PATENTSCHRIFT

(11) **EP 2 803 516 B1**
(45) Veröffentlichungstag und Bekanntmachung des Hinweises auf die Patenterteilung: **10.07.2019**
(21) Anmeldenummer: 14168258.3
(22) Anmeldetag: 14.05.2014
(51) Int. Cl.: B60H 1/00, F16L 3/04, F16L 3/237

(54) **Luftkasten eines Kraftfahrzeuges**
Airbox of a vehicle
Caisson à vent de véhicule

(30) Priorität: 14.05.2013 DE 102013208886
(43) Veröffentlichungstag der Anmeldung: 19.11.2014
(73) Patentinhaber: MAHLE Behr GmbH & Co. KG, 70469 Stuttgart (DE)
(72) Erfinder: Hoffmann, Bernd, 71665 Vaihingen/Enz (DE); Käser, Jochen, 70180 Stuttgart (DE); Liedtke, Oliver, 74915 Waibstadt (DE)
(74) Vertreter: Grauel, Andreas

(56) Entgegenhaltungen:
- EP-A1- 0 593 937
- EP-A1- 1 544 532
- EP-A1- 1 821 058
- DE-A1- 19 740 402
- US-A1- 2002 117 850

## Beschreibung

### Technisches Gebiet

Die Erfindung betrifft ein Luftkasten eines Kraftfahrzeuges, nach dem Oberbegriff von Anspruch 1.

### Stand der Technik

DE 197 40 402 A offenbart ein Luftkasten eines Kraftfahrzeuges.

Verbindungsbaugruppen sind Teile einer Schnellkupplung und an sich bekannt. Schnellkupplungen sind lösbare Verbindungen und werden verwendet, um medienführende Leitungen oder Schläuche beispielsweise mit einem Aggregat im Motorraum eines Kraftfahrzeuges zu verbinden. Das Aggregat kann insbesondere ein fluidaufnehmendes Aggregat, beispielsweise ein Wärmetauscher sein, der mittels Schläuchen an den Kühlmittelkreislauf in dem Kraftfahrzeug angeschlossen wird.

Bekannte Schnellkupplungen weisen ein Steckteil, das die Vaterseite bildet, und ein Aufnahmeteil, das die Mutterseite bildet, auf. Im Stand der Technik bekannte Steckteile weisen an der Vaterseite ein Dreh- und/oder Frästeil auf. Die Mutterseite wird durch eine Kupplungsmuffe, beispielsweise eine Kupplungsmuffe einer Kunststoffkupplung realisiert, die eine Dichtung, insbesondere einen Dichtring und eine Rastfeder aufweist. An der Vaterseite wird der Dichtsitz für den Dichtring der Mutterseite gebildet. Ferner ist an der Vaterseite ein Hinterschnitt für die Rastfeder ausgebildet. Die Dreh- und/oder Frästeile müssen im Einsatz im Kraftfahrzeug bei einer Vielzahl von Anwendungen an ein gebogenes Aluminiumrohr des Aggregates angeschlossen werden. Das metallische Dreh- und/oder Frästeil wird hierbei an das Aluminiumrohr gelötet. Wichtig ist hierbei, dass die Lage des Aluminiumrohrs zu dem Dreh- und/oder Frästeil auf Grund der Verdrehsicherung lagegenau vor dem Löten fixiert wird. Das verlötete Aluminiumrohr und das Verbindungsbaugruppenelement bilden hierbei dann die Baugruppe. Die Baugruppe muss vor dem Einbau in das Kraftfahrzeug separat auf Dichtigkeit geprüft werden, insbesondere wenn die Medien wie Kühlmittel unter einem bestimmten Druck in dem Aggregat und den Leitungen vorliegen.

Dies führt dazu, dass die Verlötung sowie die Dichtigkeitsprüfung als separater Verfahrensschritt im Herstellungsprozess erfolgen, wodurch der Herstellungsprozess aufwendig und teuer ist.

Es ist daher die Aufgabe der Erfindung, einen Luftkasten zu schaffen, die einfacher und kostengünstiger herzustellen ist.

Die Aufgabe wird durch einen Luftkasten gemäß den Merkmalen des Anspruchs 1 gelöst. Ausgestaltungen und Weiterentwicklungen der Verbindungsbaugruppe sind den abhängigen Unteransprüchen zu entnehmen.

Die Verbindungsbaugruppe zum Verbinden eines Anschlussstutzens eines Aggregates mit einer Kupplungsmuffe eines medienführenden Schlauches, zeichnet sich dadurch aus, dass ein erstes Verbindungsbaugruppenelement und ein zweites Verbindungsbaugruppenelement vorgesehen sind, wobei das erste Verbindungsbaugruppenelement derart eingerichtet ist, dass ein Dichtsitz für ein Dichtelement bereitgestellt wird und das zweite Verbindungsbaugruppenelement zweiteilig aufgebaut ist. Das erste Verbindungsbaugruppenelement weist hierbei ein gestauchtes Rohr und ein geradlinig verlaufendes oder gebogenes Rohrelement auf. Das gestauchte Rohr kann ein gestauchtes Aluminiumrohr sein. An dem gestauchten Rohr ist ein Anschluss für eine Kupplungsmuffe realisiert. Hierfür weist das gestauchte Rohr einen zylinderförmigen ersten Rohrabschnitt mit einem ersten Durchmesser und einen zweiten Rohrabschnitt mit einem sich vergrößernden Durchmesser auf, der mit dem Rohrelement verbunden ist. Der zweite Rohrabschnitt des gestauchten Rohres realisiert hierbei einen Hinterschnitt für die Kupplungsmuffe eines zu verbindenden Schlauches. Der Dichtsitz für ein Dichtelement der Kupplungsmuffe ist bevorzugt zwischen dem zylindrisch verlaufenden ersten Rohrabschnitt und dem zweiten Rohrabschnitt angeordnet. Der Dichtungssitz kann durch eine Ringnut realisiert sein, es kann aber auch vorgesehen sein, das Dichtelement zwischen dem ersten und dem zweiten Rohrabschnitt zu fixieren und so eine Dichtung zu realisieren. Die Ausgestaltung des Dichtsitzes kann hierbei an die jeweils in der Kupplungsmuffe verwendete Dichtelementart angepasst sein, wie beispielweise davon, ob ein O-Ring oder eine Flachdichtung verwendet wird.

Das erste Verbindungsbaugruppenelement ist von dem zweiten Verbindungsbaugruppenelement zumindest bereichsweise umfangsseitig umschlossen. Das zweite Verbindungselement nimmt hierbei den Umfang des Rohrelementes zumindest abschnittsweise auf.

Das zweite Verbindungsbaugruppenelement weist eine erste Halbschale und eine zweite Halbschale auf. Die erste Halbschale ist einstückig mit einem Befestigungsclip ausgebildet. Die Halbschalen können lösbar verbunden werden nachdem das Rohrelement zwischen diese angeordnet ist. Die lösbare Verbindung erfolgt hierbei durch ein Element oder Segment des Befestigungsclips welches in Wirkverbindung mit einem Bereich der zweiten Halbschale oder einem mit der zweiten Halbschale verbundenen Segment tritt. Das zweite Verbindungsgruppenbauelement ist bevorzugt aus einem Kunststoff gefertigt und bildet somit eine Kunststoffkupplungskomponente aus. Kunststoff ist ein leichter Werkstoff und Bauteile aus Kunststoff sind flexibel herstellbar, beispielsweise durch ein Form- oder Spritzgussverfahren herstellbar.

Die zweite Halbschale ist integral mit einem Luftkasten im Motorraum des Kraftfahrzeuges ausgebildet. Somit kann ein Luftkastensegment mit einem am Befestigungsclip ausgebildeten Schnapphaken verbunden werden, bevorzugt lösbar verbunden werden. Hierdurch wird bevorzugt eine lineare Verschiebung und/oder Verkippung der Verbindungsbaugruppenelemente verhindert.

Die Verdrehsicherung des Verbindungsbaugruppenelementes ist mittels des zweiten Verbindungsbaugruppenelementes realisiert. Hierbei wirkt der am Befestigungsclip ausgebildete Schnapphaken mit dem Luftkastensegment zusammen. Somit wird die Verdrehsicherung durch ein Zusammenwirken der ersten und zweiten Halbschale realisiert.

In einer bevorzugten Ausgestaltung der Verbindungsbaugruppe weist das erste Verbindungsbaugruppenelement einen Hinterschnitt auf. An den Hinterschnitt kann eine Rastfeder der Kupplungsmuffe einrasten und somit die Kupplungsmuffe an der Verbindungsbaugruppe fixieren.

Dadurch sind die Funktionen, die eine Verbindungsbaugruppe zu gewährleisten hat, unterschiedlich zu im Stand der Technik bekannten Verbindungsbaugruppen auf zwei Verbindungbaugruppenelemente aufgeteilt.

Das erste Verbindungsbaugruppenelement kann die Ausbildung des Dichtsitzes für das Dichtelement der Kupplungsmuffe übernehmen und stellt eine Funktionalität bereit, die eine sichere Verbindung gewährleistet. Das zweite Verbindungsbaugruppenelement realisiert die Funktion des Abstützens gegen eine Verkippung der Verbindungsbaugruppe und/oder der Kupplungsmuffe sowie eine Verdrehsicherung. Es wird eine gute Abstützung der VDA-Kupplung insgesamt realisiert. Ferner wird eine Kraftübertragung von der Kupplung insgesamt in das erste Verbindungsbaugruppenelement realisiert. Dies ist vorteilhaft, da im Betrieb des Kraftfahrzeuges, insbesondere bei periodisch auftretenden Schwingungen oder Erschütterungen, ein Aneinanderreiben oder Scheuern der Kunststoffteile wie Befestigungsclip und Segmenten des Luftkastens am Rohrelement, insbesondere Aluminiumrohr, verhindert werden kann. Das Rohrelement und/oder das gestauchte Rohr sind gut in dem zweiten Verbindungsbaugruppenelement gegen Verschiebung und Verkippung fixiert. Außerdem können der Prozessschritt des Lötens bei der Fertigung und die damit im Stand der Technik notwendige Dichtigkeitsprüfung entfallen. Besonders vorteilhaft ist die gute Abstützung der Kupplungsmuffe durch die Verbindungsbaugruppe, insbesondere durch das zweite Verbindungsgruppenbauelement. Insgesamt werden alle funktionellen Anforderungen an eine Verbindungsbaugruppe, insbesondere an das Vaterstück, realisiert.

Die Aufgabe wird ebenfalls durch ein Kraftfahrzeug mit mindestens einem Aggregat und einer VDA-Kupplung gelöst, wobei die VDA-Kupplung mindestens eine Kupplungsmuffe, die mit einem Schlauch verbindbar ist oder verbunden ist, und einen erfindungsgemäßen Luftkasten aufweist. Die Verbindungsbaugruppe und die Kupplungsmuffe bilden insbesondere eine lösbare VDA-Schnellkupplung.

Auf Grund des verbesserten Aufbaus der Verbindungsbaugruppe kann im Betrieb des Fahrzeuges trotz vorhandener Fahrzeugschwingungen und Motorschwingungen erreicht werden, dass das Rohr nicht mehr an der Halterung für dieselbe scheuert. Ferner können die Herstellkosten für die VDA-Kupplung insgesamt gesenkt werden.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:
- Fig. 1 a bis c: ein erstes Ausführungsbeispiel eines erfindungsgemäßen Luftkastens in Draufsicht und in unterschiedlichen Schnittdarstellungen,
- Fig. 2a und b: eine weitere Darstellung des erfindungsgemäßen Luftkastens in Frontansicht und in Schnittdarstellung.

Einander entsprechende Teile - in Funktion und Gestalt - sind in allen Figuren der Zeichnung mit den gleichen Bezugsziffern bezeichnet.

### Bevorzugte Ausführung der Erfindung

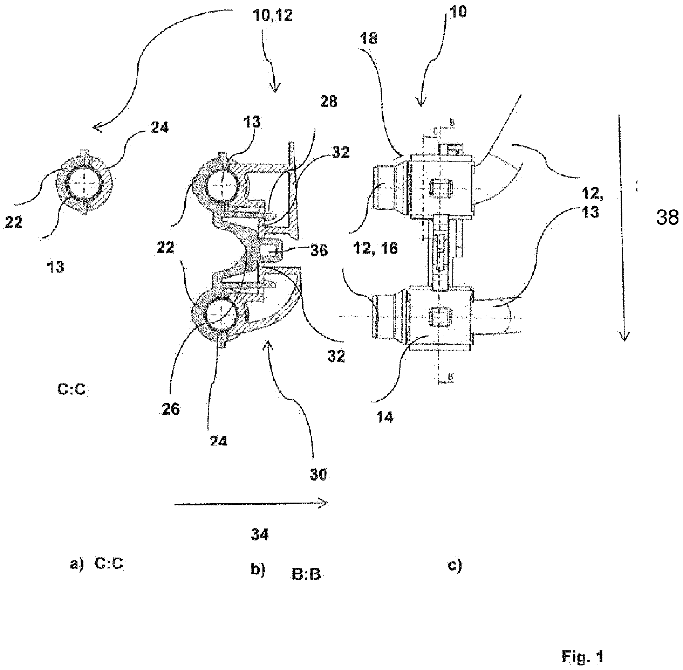

Figur 1 zeigt ein erstes Ausführungsbeispiel einer Verbindungsbaugruppe 10 in Draufsicht von oben und in Schnittdarstellung in einer Ebene senkrecht zur Blattebene. Figur 1c zeigt die Verbindungsbaugruppe 10 in Draufsicht, Figur 1b ist eine Darstellung der Verbindungsbaugruppe in einer Schnittebene B:B und Figur 1a zeigt eine Schnittdarstellung in der Ebene C:C. Die Verbindungsbaugruppe 10 ist mit einer Skalierung von 2:1 dargestellt. Der Aufbau der Verbindungsgruppe 10 wird im Folgenden anhand der Figuren 1a, 1b und 1c erläutert, wobei die Figuren 1a, 1b und 1c unterschiedliche Komponenten der Verbindungsbaugruppe zeigen, je nachdem, welche Ansicht in welcher Schnittebene die jeweilige Komponente zeigt, bzw. verdeckt.

Die Verbindungsbaugruppe 10 ist Teil einer VDA-Kupplung und dient dem Verbinden einer Leitung oder eines Schlauchelementes (nicht dargestellt) an ein nicht dargestelltes Aggregat, welches in einem Motorraum eines Kraftfahrzeuges (nicht dargestellt) angeordnet ist. Das Aggregat ist beispielsweise ein Wärmetauscher. Die Verbindungsbaugruppe 10 weist ein erstes Verbindungsbaugruppenelement 12 und ein zweites Verbindungsbaugruppenelement 14 auf.

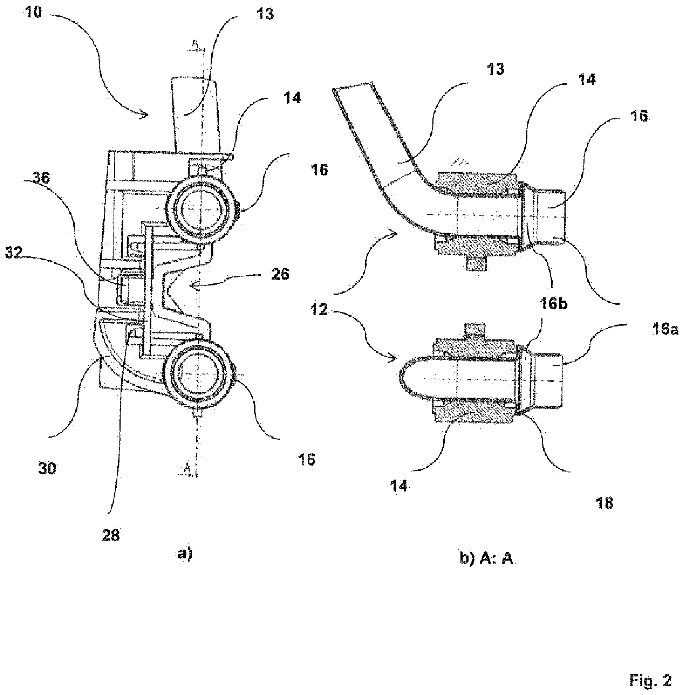

Das erste Verbindungsbaugruppenelement 12 weist zumindest bereichsweise ein gestauchtes Rohr 16 mit einem Rohrabschnitt 16a und einem Rohrabschnitt 16b (siehe Figur 2a) auf, wobei der Rohrabschnitt 16a einen kleineren Durchmesser aufweist als der Rohrabschnitt 16b. Bevorzugt weist das erste Verbindungsbaugruppenelement 12 ein geradlinig verlaufendes oder gekrümmtes Rohrelement 13 und das gestauchte Rohr 16 auf. Das gestauchte Rohr 16 dient dem Anschluss eines Gegenstücks, insbesondere dem Anschluss einer Kupplungsmuffe (nicht dargestellt). Somit bilden die Verbindungsbaugruppe 10 und die Kupplungsmuffe eine VDA-Kupplung aus.

Das erste Verbindungsbaugruppenelement 12 kann hierbei durch den Verfahrensschritt des Stauchens aus einem Halbzeug, insbesondere einem Rohr hergestellt werden, sodass durch eine damit verbundene Materialverschiebung gezielt die gewünschte Geometrie geformt werden können. Es kann ein formveränderter Abschnitt - das gestauchte Rohr 16 - an dem ansonsten unveränderten Rohr - dem Rohrelement 13 - ausgebildet werden. Dadurch wird ebenfalls die Teilevielfalt reduziert, da das erste Verbindungsbaugruppenelement 12 aus einem Halbzeug gestaucht werden kann. Somit kann die Stauchtechnologie einen Reibschweißprozess oder den Lötprozess ersetzen und Kosten sparen. Zusätzlich weisen Bauteile, die durch Stauchen hergestellt sind, einen homogenen Faserverlauf auf, wobei durch diesen nicht unterbrochenen Faserverlauf das gestauchte Rohr 16 einer höheren Belastung ausgesetzt werden kann im Vergleich zum gefrästen Anschlussteil.

Das gestauchte Rohr 16 weist am Übergang zum Rohrelement 13 einen Hinterschnitt 18 oder eine Hinterschneidung 18 auf. Am gestauchten Rohr 16 ist ferner ein Dichtsitz 20 für ein Dichtelement der Kupplungsmuffe (nicht gezeigt) ausgebildet. Der Dichtsitz 20 kann als Ringnut 20 ausgebildet sein. Das Dichtelement für die Kupplungsmuffe ist bevorzugt eine als O-Ring ausgebildete elastische Dichtung.

Das zweite Verbindungsbaugruppenelement 14 weist eine erste Halbschale 22 und eine zweite Halbschale 24 auf. Die erste Halbschale 22 ist einstückig mit einem Befestigungsclip 26 ausgebildet, der einen Schnapphaken 28 aufweist. Die zweite Halbschale 24 ist mit einem Luftkasten 30, von dem nur Teile gezeigt sind, integral verbunden, bevorzugt ein Teil des Luftkastens 30.

Die Figuren 1a, 1b und 1c zeigen die Verbindungsgruppe 10 im montierten Zustand. Das erste Verbindungsbaugruppenelement 12 ist in dem zweiten Verbindungsbaugruppenelement 14 umfänglich aufgenommen, das heißt, das Rohrelement 13 ist in den Halbschalen 22 und 24 aufgenommen, die den Umfang des Rohrelementes 13 umschließen. Im Detail ist das Rohrelement 13 des ersten Verbindungsbaugruppenelementes 12 zwischen der ersten Halbschale 22 und der zweiten Halbschale 14 angeordnet. Hierbei ist der Schnapphaken 28 in einem Segment 32 des Luftkastens 30 - einem Luftkastensegment 32 - eingerastet und fixiert auf diese Weise die Lage des Rohrelementes 13 in dem zweiten Verbindungsbaugruppenelement 14 in der vertikalen Achse 34, die in Figur 1b gezeigt ist. Ferner ist in Figur 1b erkennbar, dass eine Lagefixierung durch ein Zusammenwirken des Luftkastensegmentes 32 mit einem mittleren Segment 36 der ersten Halbschale 22 realisiert ist. Insbesondere ist hierdurch eine Sicherung gegen eine Lageveränderung in Richtung einer Achse 38 realisiert. Durch das Zusammenwirken des Schnapphakens 28, des Luftkastensegments 32 und des Segments 36 können somit eine Verkippsicherung und eine Verdrehsicherung realisiert werden.

Die beiden Halbschalen 22, 24 sind aus einem Kunststoff, bevorzugt einem Kunststoff mit einer gewissen Festigkeit gefertigt, der im Spritzformverfahren oder Spritzgrussverfahren zur Herstellung des zweiten Verbindungsbaugruppenelementes 14 verwendet werden kann.

Figur 2a zeigt die Verbindungsbaugruppe 10 in montiertem Zustand in vertikaler Draufsicht von vorne mit Blick auf das Ende des gestauchten Rohrs 16. Die Komponenten sind gespiegelt zu der Darstellung in Figur 1b gezeigt. Für gleiche Komponenten werden dieselben Bezugszeichen verwendet wie in den Figuren 1a, 1b, 1c.

Gezeigt ist in Figur 2a das gestauchte Rohr 16 des ersten Verbindungsbaugruppenelements 12. Das Rohrelement 13 ist in der ersten Halbschale 22 und der zweiten Halbschale 24 aufgenommen. Die erste Halbschale 22 ist einstückig mit einem Befestigungsclip 26 verbunden, bevorzugt einstückig gefertigt. Der Schnapphaken 28 des mit der ersten Halbschale 22 verbundenen Befestigungsclips 26 ist mit dem Luftkastensegment 32 lösbar verbunden.

Figur 2b zeigt eine Schnittdarstellung der Verbindungsbaugruppe 10 von Figur 2a in der Ebene A:A. Dargestellt ist das erste Verbindungsbaugruppenelement 12 mit dem Rohrelement 13 und dem gestauchten Rohr 16. Das zweite Verbindungsbaugruppenelement 14 umschließt das Rohrelement 13. Auf das gestauchte Rohr 16 kann das Kupplungsmuffenelement eines Schlauches (nicht dargestellt) aufgesteckt werden, welches an dem Hinterschnitt 18 einrasten kann. Eine im Kupplungsmuffenelement (nicht dargestellt) angeordnete Dichtung kann am Dichtsitz 20 anliegen und somit die Kupplung dichten.

Die Verbindungsbaugruppe 10 bildet eine lösbare Schnellkupplung zum Verbinden eines Schlauches mit einem Aggregat im Motorraum eines Kraftfahrzeuges. Der Schlauch ist hierbei von einer Kupplungsmuffe aufgenommen, die mit der Verbindungsbaugruppe 10 lösbar verbunden werden kann. Hierbei wird das erste Verbindungsbaugruppenelement 12 mit der Kupplungsmuffe lösbar verbunden.

## Patentansprüche

1. Luftkasten eines Kraftfahrzeuges, geeignet, um im Motorraum des Kraftfahrzeugs angeordnet zu sein, wobei der Luftkasten mit einer Verbindungsbaugruppe zum Verbinden eines Anschlussstutzens eines Aggregates mit einer Kupplungsmuffe eines medienführenden Schlauches ausgebildet ist, **dadurch gekennzeichnet, dass** ein erstes Verbindungsbaugruppenelement (12) und ein zweites Verbindungsbaugruppenelement (14) vorgesehen sind, wobei das erste Verbindungsbaugruppenelement (12) einen Dichtsitz (20) für ein Dichtelement, insbesondere einen O-Ring bereitstellt und das zweite Verbindungsbaugruppenelement (14) zweiteilig aufgebaut ist, wobei das erste Verbindungsbaugruppenelement (12) von dem zweiten Verbindungsbaugruppenelement (14) zumindest bereichsweise umfangsseitig umschlossen ist, wobei das zweite Verbindungsbaugruppenelement (14) eine erste Halbschale (22) und eine zweite Halbschale (24) aufweist, wobei die erste Halbschale (22) einstückig mit einem Befestigungsclip (26) ausgebildet ist und die zweite Halbschale (24) integral zumindest mit einem Teilabschnitt des Luftkastens (30) ausgebildet ist, wobei eine Verdrehsicherung mittels des Befestigungsclips (26) des zweiten Verbindungsbaugruppenelementes (14) realisiert ist und am Befestigungsclip (26) zwei Schnapphaken (28) ausgebildet sind, wobei die Schnapphaken in einem Luftkastensegment (32) einrasten, wobei zur Lagefixierung ein zwischen den zwei Schnapphaken angeordnetes mittleres Segment (36) vorgesehen ist, das mit dem Luftkastensegment (32) zusammenwirkt, wobei durch das Zusammenwirken der Schnapphaken (28), des Luftkastensegments (32) und des mittleren Segments (36) eine Verkippsicherung und eine Verdrehsicherung realisiert sind.

2. Luftkasten nach Anspruch 1, **dadurch gekennzeichnet, dass** das erste Verbindunqsbaugruppenelement (12) einen Hinterschnitt (18) aufweist.

3. Luftkasten nach Anspruch 1 oder 2, **dadurch gekennzeichnet, dass** das erste Verbindungsbaugruppenelement (12) ein gestauchtes Rohr (16), insbesondere ein gestauchtes Aluminiumrohr, aufweist.

4. Kraftfahrzeug mit mindestens einem Aggregat und einer VDA-Kupplung, die mindestens eine Kupplungsmuffe, die mit einem Schlauch verbunden ist, und einen Luftkasten mit einer Verbindungsbaugruppe (10) nach einem der Ansprüche 1 bis 3 aufweist, wobei das erste Verbindungsbaugruppenelement (12) der Verbindungsbaugruppe (10) mit der Kupplungsmuffe verbindbar ist oder verbunden ist.

## Claims

1. An air box of a motor vehicle which is suited to be arranged in the engine compartment of the motor vehicle, wherein the air box is designed with a connection assembly for connecting a connecting piece of an aggregate to a coupling sleeve of a medium-carrying tube, **characterised in that** a first connection assembly element (12) and a second connection assembly element (14) are provided, wherein the first connection assembly element (12) provides a sealing seat (20) for a sealing element, in particular an O-ring, and the second connection assembly element (14) is composed of two parts, wherein the first connection assembly element (12) is at least partially circumferentially surrounded by the second connection assembly element (14), wherein the second connection assembly element (14) has a first half shell (22) and a second half shell (24), wherein the first half shell (22) is integrally designed with a fixing clip (26) and the second half shell (24) is integrally designed with at least a partial section of the air box (30), wherein an anti-rotation means is implemented by means of the fixing clip (26) of the second connection assembly element (14) and two snap hooks (28) are designed on the fixing clip (26), wherein the snap hooks snap into an air box segment (32), wherein a middle segment (36) acting together with the air box segment (32) and arranged between the two snap hooks is provided in order to fix the position, wherein an anti-tilting means and an anti-twisting means are implemented by the cooperation between the snap hooks (28), the air box segment (32) and the middle segment (36).

2. The air box according to claim 1, **characterised in that** the first connection assembly element (12) has an undercut (18).

3. The air box according to claim 1 or 2, **characterised in that** the first connection assembly element (12) has a compressed tube (16), in particular a compressed aluminium tube.

4. A motor vehicle with at least one aggregate and a VDA coupling which has at least one coupling sleeve which is connected to a tube and an air box with a connection assembly (10) according to one of claims 1 to 3, wherein the first connection assembly element (12) of the connection assembly (10) can be connected or is connected to the coupling sleeve.

## Revendications

1. Boîte à air d'un véhicule automobile, appropriée pour être disposée dans le compartiment moteur du véhicule automobile, où la boîte à air est configurée en étant dotée d'un ensemble de liaison servant à relier une tubulure de raccordement d'un bloc unitaire, à un manchon d'accouplement d'un tuyau flexible acheminant des milieux en circulation, **caractérisée en ce qu'**il est prévu un premier élément (12) de l'ensemble de liaison et un second élément (14) de l'ensemble de liaison, où le premier élément (12) de l'ensemble de liaison fournit un siège étanche (20) pour un élément d'étanchéité, en particulier un joint torique, et le second élément (14) de l'ensemble de liaison est configuré en deux parties, où le premier élément (12) de l'ensemble de liaison est entouré au moins partiellement, côté périphérie, par le second élément (14) de l'ensemble de liaison, où le second élément (14) de l'ensemble de liaison présente une première demi-coque (22) et une seconde demi-coque (24), où la première demi-coque (22) est configurée en formant une seule et même pièce avec un clip de fixation (26), et la seconde demi-coque (24) est configurée en étant intégrée à au moins une partie de la boîte à air (30), où une sécurité anti-rotation est réalisée au moyen du clip de fixation (26) du second élément (14) de l'ensemble de liaison, et deux crochets d'encliquetage (28) sont formés sur le clip de fixation (26), où les crochets d'encliquetage s'enclenchent dans un segment (32) de la boîte à air, où il est prévu, pour la fixation en position, un segment central (36) disposé entre les deux crochets d'encliquetage, lequel segment central agit de façon conjointe avec le segment (32) de la boîte à air, où une sécurité anti-basculement et une sécurité anti-rotation sont réalisées grâce à l'action conjointe des crochets d'encliquetage (28), du segment (32) de la boîte à air et du segment central (36).

2. Boîte à air selon la revendication 1, **caractérisée en ce que** le premier élément (12) de l'ensemble de liaison présente une contre-dépouille (18).

3. Boîte à air selon la revendication 1 ou 2, **caractérisée en ce que** le premier élément (12) de l'ensemble de liaison présente un tube comprimé (16), en particulier un tube en aluminium comprimé.

4. Véhicule automobile comprenant au moins un bloc unitaire et un accouplement VDA qui présente au moins un manchon d'accouplement, qui est relié à un tuyau flexible, et une boîte à air dotée d'un ensemble de liaison (10) selon l'une quelconque des revendications 1 à 3, où le premier élément (12) de l'ensemble de liaison (10) peut être relié ou est relié au manchon d'accouplement.
